# NEUE EUROPÄISCHE PATENTSCHRIFT

(11) **EP 1 597 545 B2**
(45) Veröffentlichungstag und Bekanntmachung des Hinweises auf die Entscheidung über den Einspruch: **13.06.2012**
(45) Hinweis auf die Patenterteilung: 11.10.2006
(21) Anmeldenummer: 04710373.4
(22) Anmeldetag: 12.02.2004
(51) Int. Cl.: G01F 23/296

(54) **SCHUTZ VOR DEN EFFEKTEN VON KONDENSATBRÜCKEN**
PROTECTION AGAINST THE EFFECTS OF CONDENSATE BRIDGES
PROTECTION CONTRE LES EFFETS DE PONTS DE CONDENSATION

(30) Priorität: 24.02.2003 DE 10308087
(43) Veröffentlichungstag der Anmeldung: 23.11.2005
(73) Patentinhaber: Endress + Hauser GmbH + Co. KG, 79689 Maulburg (DE)
(72) Erfinder: LOPATIN, Sergej, 79540 Lorrach (DE); D'ANGELICO, Sascha, 79588 Efringen-Kirchen (DE)
(74) Vertreter: Andres, Angelika Maria
(86) Internationale Anmeldenummer: PCT/EP2004/001310
(87) Internationale Veröffentlichungsnummer: WO 2004/075417

(56) Entgegenhaltungen:
- EP-A- 0 810 423
- EP-A- 0 950 879
- WO-A-02/42724

## Beschreibung

Die Erfindung bezieht sich auf eine Vorrichtung zur Messung und/oder Überwachung einer physikalischen oder chemischen Prozessgröße eines Mediums, mit einer schwingfähigen Einheit, mit einer Antriebs-/Empfangseinheit, die mindestens einen Signaleingang und einen Signalausgang aufweist, und die die schwingfähige Einheit zu Schwingungen anregt, bzw. die deren Schwingungen empfängt, mit einer Regel-/Auswerteeinheit, die mindestens einen Signaleingang und einen Signalausgang aufweist, die die Antriebs-/Empfangseinheit regelt, bzw. die die Schwingungen der schwingfähigen Einheit auswertet, und mit mindestens einer Sendeleitung und einer Empfangsleitung zwischen der Regel-/Auswerteeinhelt und der Antriebs-/Empfangseinheit, wobei die Sendeleitung mit dem Signalausgang der Regel-/Auswerteeinheit und dem Signaleingang der Antriebs-/Empfangseinheit verbunden ist, und wobei die Empfangsleitung mit dem Signalausgang der Antriebs-/Empfangseinheit und dem Signaleingang der Regel-/Auswerteeinheit verbunden ist wobei die sendeleitung und die Empfangsleitung mit der Regel-/Auswerteeinheit und mit der Antriebs-/Empfangseinheit über Steckverbindungen verbunden sind
und wobei mindestens eine dritte Leitung vorgesehen ist, die derartig ausgestaltet und angeordnet ist, dass sie im Bereich der Steckverbindungen zwischen der Sende- und Empfangsleitung befindlich ist. Bei den zu messenden Prozessgrößen kann es sich z.B. um Füllstand, Viskosität, Dichte, Druck, Temperatur oder um den pH-Wert des Mediums handeln.

WO0242724 beschreibt ein Messgerät mit einem Schwingelement, in dem der Einfluss von Störgrößen wie z.B. Änderungen der Temperatur, des Drucks oder der viskosität auf die Schwingfrequenz der mechanischen Schwingungen des Schwingelements kompensiert wird, um eine genaue Messung von Füllstand oder Dichte zu ermöglichen.

Von der Anmelderin werden Messgeräte zur Messung und/oder Überwachung des Füllstands eines Mediums in einem Behälter unter der Bezeichnung "Liquiphant" produziert und vertrieben. Das im folgenden geschilderte Aufbauprinzip eines solchen Messgeräts gilt jedoch genauso für ähnliche Messgeräte. Ein solches Messgerät besteht üblicherwelse aus einer schwingfähigen Einheit, einer Antriebs-/Empfängseinheit und einer Regel-/Steuereinheit. Die Antriebs-/Empfangseinheit regt die schwingfählge Einheitbeim Liquiphanten ist dies eine Schwinggabei - zu Schwingungen an und empfängt die Schwingungen der schwingfähigen Einheit. Die Frequenz der Schwingung hängt z.B. davon ab, ob die schwingfähige Einheit in Luft schwingt oder ob sie von dem Medium bedeckt wird. Somit lässt sich aus der Frequenz auf den Grad der Bedeckung rückschließen. Aus der Amplitude lässt sich dies ebenfalls ableiten; üblicherweise wird jedoch die Frequenz ausgewertet. In der Antriebs/Empfangseinheit kann beispielsweise mindestens ein piezo-elektrisches Element vorhanden sein, das ein elektrisches Signal in eine mechanische Schwingung umsetzt, die dann über eine passende Membran auf die schwingfähige Einheit übertragen wird. Entsprechendes gilt für die Umsetzung der mechanischen Schwingung in ein elektrisches Signal. Eine Rückkoppelelektronik, die das Signal der schwingfähigen Einheit wieder verstärkt und rückführt, und die Elektronik zur Auswertung der Schwingung sind in einer Regel-/Auswerteeinheit zusammengefasst Diese Regel-/Auswerteeinheit ist üblicherweise weiter vom eigentlichen Prozess entfernt, um z.B. die Elektronik vor den Einflüssen des Mediums, z.B. hohe Temperaturen besser zu schützen. Zwischen der Antriebs-/Empfangseinheit und der Regel-/Auswerteeinheit befinden sich üblicherweise mindestens zwei elektrische Leitungen: eine Sende- und eine Empfangsleitung. Meist ist noch ein Massekabel vorgesehen, das ebenfalls zur Antriebs-/Empfangseinheit geführt wird. Auf diesen Leitungen gelangt das Anregungssignal zur Antriebs-/Empfängseinhelt und das Empfangssignal zur Regel-/Auswerteeinheit Je nach den Erfordernissen des Behälters oder der zu überwachenden Anlage kann es sein, dass diese Leitungen bis zu mehreren Metern lang sind. Um diese üblicherweise isolierten Leitungen herum befindet sich zum weiteren Schutz meist eine Art von Rohr. Deshalb wird der Abschnitt zwischen Antriebs-/Empfangseinheit und Regel-/Auswerteeinheit auch meist als Rohrverlängerung bezeichnet. Grundsätzlich kann trotz aller Maßnahmen zur Abdichtung des Innenvolumens der Rohrverlängerung ein Eindringen von Feuchtigkeit oder anderer Gase nicht gänzlich ausgeschlossen werden. Durch Temperatureinflüsse können sich weiterhin Ausdünstungen der inneren Bauteile oder z.B. der Kleber ergeben. Durch Kondensation der Gase oder der Feuchtigkeit kann sich dann zwischen der Sende- und der Empfangsleitung In Gestalt einer Kondensatbrücke eine elektrisch leitende Verbindung ergeben, durch die das Sendesignal auf das Empfangssignal einwirkt. Dies kann bis zum Totalausfall des Messgerätes führen. Solche Kondensatbrücken wirken besonders störend an den aus fertigungstechnischen Gründen notwendigen Steckverbindungen nahe der Elektronik der Regel-/Auswerteeinheit und an der anderen Seite nahe der Antriebs-/Empfangseinheit. Diese Steckverbindungen können nicht wie z.B. die Antriebs-/Empfangseinheit vergossen werden. Ein Problem einer Kondensatbrücke zwischen Sende- und Empfangsleitung besteht darin, dass das Sendesignal auf die Empfangsleitung übersprechen und somit das Empfangssignal stören kann.

Unter der Bezeichnung "Vibranivo" (UWT Apparate GmbH) ist ein Füllstand-Grenzschalter bekannt, welcher eine dritte Leitung aufweist, welche zwischen der Sende- und Empfangsleitung befindlich ist und auf Masse liegt. Die dritte Leitung kontaktiert die Antriebs-/Empfangseinheit und dient dieser als Bezugspotential.

Die Aufgabe der Erfindung besteht darin, die Effekte einer Kondensatbrücke zwischen Sende- und Empfangsleitung zu minimieren.

Die Aufgabe wird erfindungsgemäß dadurch gelöst, dass die dritte Leitung mit einer Spannungsquelle verbunden ist, die eine Ausgangsimpedanz beisitzt, die kleiner ist als die Impedanz einer Kondensatbrücke zwischen Sende- und Empfangsleitung im Bereich der Steckverbindungen und dass es sich bei der Spannungsquelle, mit der die dritte Leitung verbunden ist, um eine Elektronikeinheit mit niedriger Ausgangsimpedanz handelt, die derartig ausgestaltet ist, dass die dritte Leitung auf dem gleichen Potential wie die Empfangsleitung liegt.

Zunächst wird also verhindert, dass es durch ein Kondensat überhaupt eine direkte elektrische Verbindung zwischen Sende- und Empfangsleitung geben kann. Eine Kondensatbrücke ergibt sich somit nur zwischen Sendeleitung und dritter Leitung oder zwischen Empfangsleitung und dritter Leitung. Wenn eine Kondensatbrücke alle drei Leitungen verbindet, so lässt sich dies in die beiden obigen Fälle aufteilen. Dadurch, dass die dritte Leitung an einer Spannungsquelle liegt, deren Ausgangsimpedanz kleiner als die Impedanz einer Kondensatbrücke ist, kann es nicht zu einer direkten Auswirkung des Sende- auf das Empfangssignal kommen. Was passiert nun bei den beiden Möglichkeiten? Die dritte Leitung iat erfindungsgemäß mit einer Spannungsquelle verbunden, die eine Ausgangsimpedanz aufweist, die kleiner als die Impedanz einer möglichen Kondensatbrücke ist. Um dies zu erreichen, sollte die Ausgangsimpedanz so klein wie möglich sein. Der Wert sollte zumindest im Bereich der Ausgangsimpedanz der Spannungsquelle sein, an der die Sendleitung anliegt. Bei der Verbindung zwischen Sendeleitung und dritter Leitung wird das Sendesignal dann kaum beeinflusst, wenn das Sendesignal von einer Spannungsquelle mit niedriger Ausgangsimpedanz stammt und die Kondensatbrücke einen hohen Widerstand aufweist. Sind durch die Kondensatbrücke die Empfängsleitung und die dritte Leitung miteinander verbunden, so wird das Empfangssignal zwar möglicherweise abgeschwächt, aber der große Vorteil ergibt sich, dass es keine direkten Kontakt mit der Sendeleitung gibt.

Die erfindungsgemäße Lösung beinhaltet, dass es sich bei der Spannungsquelle, mit der die dritte Leitung verbunden ist, um eine Elektronikeinheit mit niedriger Ausgangsimpedanz handelt, die derartig ausgestaltet ist, dass die dritte Leitung auf dem gleichen Potential wie die Empfangsleitung liegt. Die dritte Leitung liegt also auf einem so genannten Guardpotential. Die Spannungsquelle, mit der die dritte Leitung verbunden ist, erzeugt hierbei ein zeitlich veränderliches Potential. Bei der Elektronikeinheit handelt es sich beispielsweise um einen Operationsverstärker, der wiederum eine niedrige Ausgangsimpedanz aufweist. Da also die Empfangsleitung und die dritte Leitung auf dem gleichen Potential liegen, kann durch eine Kondensatbrücke zwischen den beiden kein Strom abfließen, der das Empfangssignal schwächen würde. Weiterhin kann dadurch für das Empfangssignal durch die Leitungskapazität kein Verlust auftreten. Daher ist diese Ausgestaltung eine deutliche Verbesserung gegenüber dem Legen der dritten Leitung auf Masse. Der Aufwand für die Elektronikeinheit ist auch relativ gering, vor allern verglichen mit dem Vorteil, der sich durch ein weniger gestörtes Empfangssignal ergibt.

Eine vorteilhafte Ausgestaltung sieht vor, dass es sich bei der dritten elektrischen Leitung um eine Abschirmung der Empfängsleitung handelt. Somit ist die Empfangsleitung stets von der dritten Leitung umgeben.

Weiterhin ergibt sich auch der Vorteil einer Abschirmung als Schutz gegenüber Einstrahlungen und als Schutz von andern Leitungen vor der abgeschirmten Leitung.

Eine Ausgestaltung sieht vor, dass die Antriebs-/Empfangseinheit mindestens ein piezo-elektrisches Element aufweist. Eine weitere Ausgestaltung sieht vor, dass die Antriebs-/Empfangseinheit genau ein piezo-elektrisches Element aufweist. Diese piezo-elektrischen Elemente weisen hohe Ausgangsimpedanzen auf.

Die Erfindung wird anhand der nachfolgenden Zeichnungen näher erläutert. Es zeigt:
- Fig. 1:: ein Blockschaltbild des Messgerätes ohne die dritte Leitung der Erfindung;
- Fig. 2:: ein detailliertes Blockschaltbild des Messgerätes mit Rohrverlängerung;
- Fig. 3:: ein Ersatzschaltbild für eine Kondensatbrücke ohne dritte Leitung;
- Fig. 4:: ein von der Erfindung nicht umfasstes Blockschaltbild eines Messgerätes mit dritter Leitung auf Masse;
- Fig. 5:: ein von der Erfindung nicht umfasstes Ersatzschaltbild für eine Kondensatbrücke mit dritter Leitung auf Masse;
- Fig. 6:: ein Blockschaltbild des Messgerätes mit dritter Leitung auf einem Guardpotential,

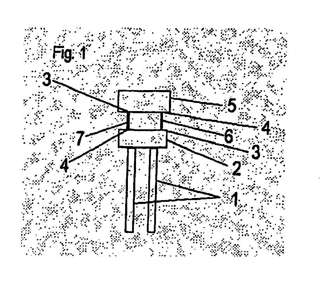

Fig. 1 zeigt ein Blockschaltbild der Vorrichtung zur Messung und/oder Überwachung einer physikalischen oder chemischen Größe, z.B. des Füllstands eines Mediums. Im gezeigten Beispiel handelt es sich bei der schwingfähigen Einheit 1 um eine Schwinggabel wie sie z.B. im Liquiphanten, der von der Anmelderin produziert und vertrieben wird, Verwendung findet Die schwingfähige Einheit 1 wird durch die Antriebs-/Empfangseinheit 2 zu Schwingungen angeregt. Dazu kann beispielsweise ein piezo-elektrisches Element oder ein Stapel solcher Elemente durch das Anlegen einer Spannung zu Schwingungen angeregt werden, die dann über eine passende Membran an die schwingfähige Einheit 1 übertragen werden. Die Antriebs-/Empfangseinheit 2 empfängt auch die Schwingungen der schwingfähigen Einheit 1, die sie in elektrische Signale umwandelt. Die Frequenz und die Amplitude der Schwingungen hängen beispielsweise davon ab, ob die schwingfähige Einheit 1 frei in Luft schwingt oder ob sie von dem Medium bedeckt wird. Die Antriebs-/Empfangseinheit 2 ist mit der Regel-/Auswerteeinheit 5 verbunden. Diese hat zum einen die Aufgabe, die Schwingungen der schwingfähigen Einheit 1 auszuwerten und daraus Aussagen z.B. über den Füllstand eines Mediums zu tätigen, zum anderen ist sie auch dafür da, die Schwingungen durch eine Rückkoppelelektronik rückzukoppeln, d.h. den Schwingungsvorgang weiterlaufen zu lassen. Zwischen der Antriebs-/Empfangseinheit 2 und der Regel-/Auswerteeinheit 5 befinden sich zwei elektrische Leitungen 6, 7, die die jeweiligen Ausgänge 4 und Eingänge 3 miteinander verbinden.

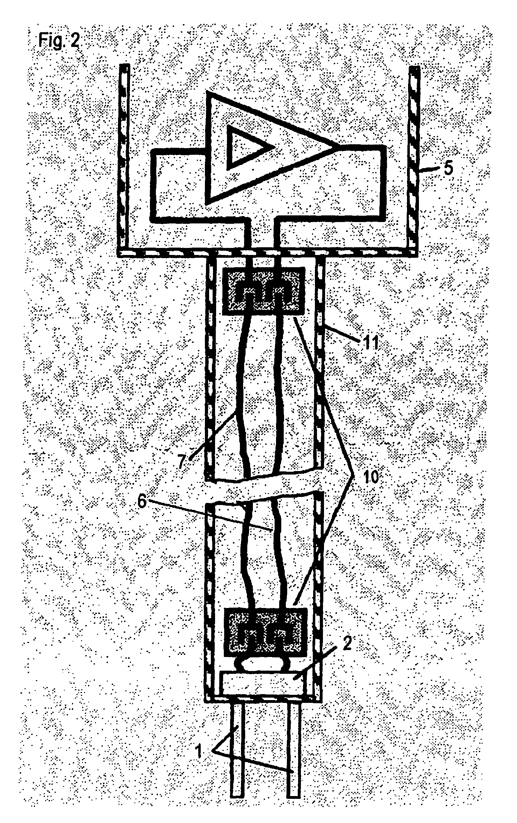

In Fig. 2 ist ein detailliertes Blockschaltbild gezeigt. Man sieht die beiden Leitungen 6, 7 in der Röhre 11. Die Verbindung der Leitungen 6, 7 mit der Antriebs-/Empfangseinhelt 2 und der Regel-/Auswerteeinheit 5 findet über Steckverbindungen 10 statt. In der Regel-/Auswerteeinheit 5 findet sich hier als Beispiel nur eine Rückkoppeleinheit. Da die Leitungen 6, 7 üblicherweise isoliert sind, kann ein Kondensat hier keine Brücke erzeugen. Im Bereich der Steckverbindungen 10 ist es jedoch möglich, dass ein Kondensat eine Brücke zwischen den Leitungen 6, 7 erzeugt. Diese Steckverbindungen 10 werden üblicherweise nicht vergossen. Kondensatbrücke treten daher entweder am Übergang von der Antriebs-/Empfangseinheit 2 zu den Leitungen 6, 7 oder zwischen Regel-/Auswerteeinheit 5 und Leitungen 6, 7 auf. Das Eindringen von Feuchtigkeit oder von Gasen lässt sich nicht immer ausschließen, da dies z.B. durch abwechselndes Erwärmen und Abkühlen auftreten kann. Ausdünstungen der inneren Bauteile oder z.B. der Kleber sind ebenfalls möglich.

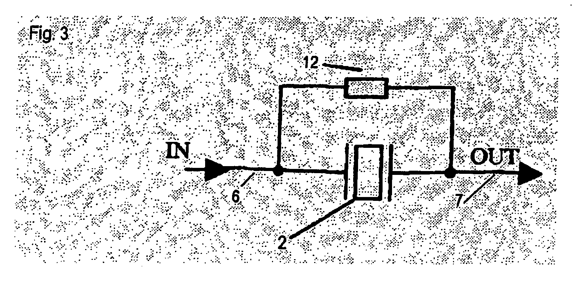

In Fig. 3 ist ein Ersatzschaltbild für eine Kondensatbrücke dargestellt, die die Sendeleitung 6 (In) mit der Empfangsleitung 7 (Out) verbindet. Zwischen den beiden Leitungen ist hier für die Antriebs-/Empfangseinheit 2 ein piezo-elektrisches Element gezeichnet. Solche Elemente haben üblichenweise sehr hohe Ausgangsimpedanzen. Die Kondensatbrücke wirkt als ein Widerstand 12, über den die Sendeleitung 6 direkt mit der Empfangsleitung 7 verbunden wird, so dass es u.a. zu einer Überlagerung der beiden Signale kommt. Es ist auch möglich, dass sich durch diese Kondensatbrücke die Schwingungsfrequenz derart ändert, dass die Regel-/Auswerteinheit 5 auf Abrissfrequenz umschaltet, so dass das Messgerät nicht mehr funktioniert.

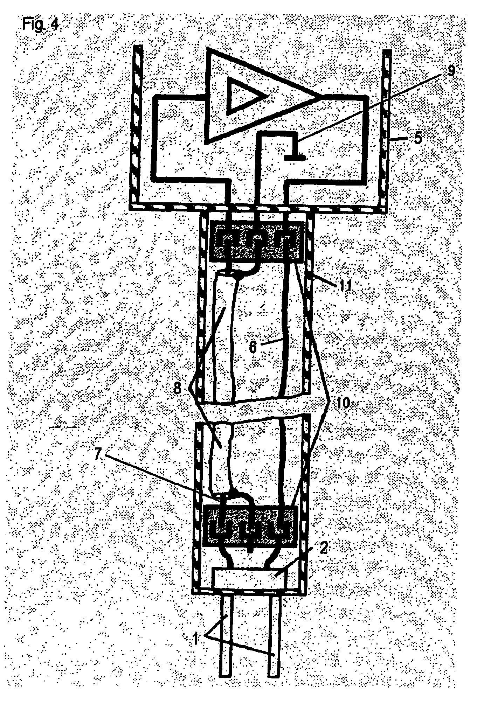

In Fig. 4 ist die dritte Leitung 8 als Abschirmung der Empfangsleitung 7 ausgebildet. Weiterhin ist in dieser Ausgestaltung die Spannungsquelle 9 Masse. Diese Ausgestaltung ist von der Erfindung nicht umfasst. Somit ist die Impedanz der Spannungsquelle 9, an der die dritte Leitung 8 anliegt, im Allgemeinen kleiner als die impedanz einer Kondensatbrücke. D.h. eine direkte Verbindung zwischen Sende- 6 und Empfangsleitung 7 tritt nicht auf, da zwischen beiden die dritte Leitung 8 befindlich ist, die an einer Ausgangsimpedanz liegt, die wesentlich kleiner als die impedanz der Kondensatbrücke ist Der Effekt einer Kondensatbrücke besteht dann also darin, dass quasi ein Spannungsteller entsteht, der die Spannung des Empfangssignals vermindert. Durch die Ausgestaltung als Abschirmung ergeben sich auch die üblichen Vorzüge einer Abschirmung. Der Schutz der abgeschirmten Empfangsleitung 7 gegenüber Einstrahlungen ist jedoch eher bei Ausgestaltungen relevant, bei denen die Rohrverlängerung 11 nicht aus Metall besteht. Das Anlegen an Masse ist sehr einfach zu realisieren, jedoch liegen somit die Empfangsleitung 7 und die dritte Leitung 8 auf unterschiedlichen Potentialen, wodurch sich die Leitungskapazität als kapazitiver Widerstand zwischen Empfangsleitung und Abschirmung bemerkbar macht, der das Empfangssignal reduziert. Bei langen Rohrverlängerungen 11 kann die Kapazität dieses Kondensators aus Empfangsleitung 7 und dritter Leitung 8 vor allem sehr groß werden. Somit helfen die dritte Leitung 8 und Masse als Spannungsquelle 9 zwar gegen die Effekte der Kondensatbrücke, aber es stellen sich kapazitive Verluste ein.

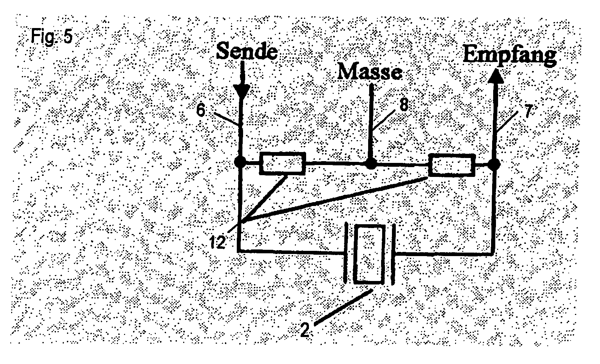

Fig. 5 zeigt die Auswirkung einer Kondensatbrücke zwischen Sende- 6 und Empfangsleitung 7 für die von der Erfindung nicht umfasste Ausgestaltung in Fig. 4. Hier ergeben sich zwei Widerstände 12, zwischen denen durch die dritte Leitung 8 Masse liegt. Daher kommt es nicht zu einer direkten Auswirkung der Sende- 6 auf die Empfangsleitung 7. Da die Empfangsleitung 7 und die dritte Leitung 8 auf unterschiedlichen Potentialen wird das Empfangssignal durch Stromfluss abgeschwächt.

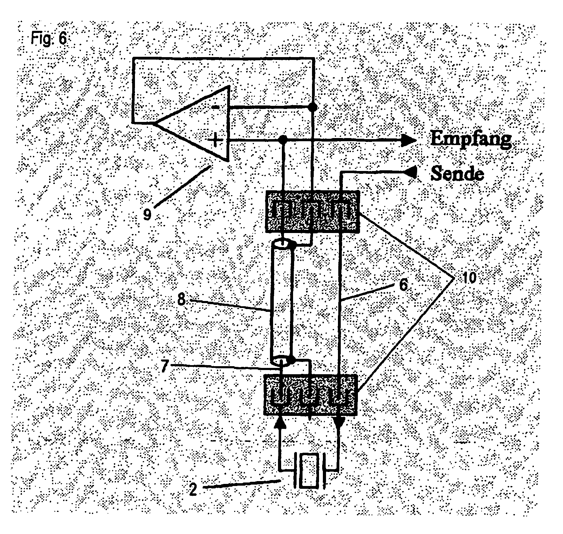

Fig. 6 zeigt die Ausgestaltung, in der die dritte Leitung 8 auf einem Guardpotential liegt. Die dritte Leitung liegt also stets auf dem gleichen Potential wie die Empfangsleitung 7. Die Spannungsquelle 9 ist hier z.B. ein Operationsverstärker mit einer entsprechend niedrigen Ausgangsimpedanz. Die Auswirkungen einer Kondensatbrücke auf die Empfangsleitung 7 sind also immer noch minimiert. Gleichzeitig ergeben sich keine kapazitiven Wiederstände zwischen der Empfangsleitung 7 und der dritten Leitung 8, da belde auf gleichem Potential liegen. Die niedrige Ausgangsimpedanz reduziert also die direkten Effekte der Kondensatbrücke und durch die passende Wahl des Potentials, an dem die dritte Leitung liegt, können die auftretenden kapazitiven Effekte verhindert werden.

### Bezugszeichenliste

- 1: Schwingfählge Einheit
- 2: Antriebs-/Empfangseinheit
- 3: Signaleingang
- 4: Signalausgang
- 5: Regel-/Auswerteeinheit
- 6: Sendeleitung
- 7: Empfangsleitung
- 8: Dritte elektrische Leitung
- 9: Spannungsquelle
- 10: Steckverbindung
- 11: Rohrverlängerung
- 12: Kondensat-Widerstand

## Patentansprüche

1. Vorrichtung zur Messung und/oder Überwachung einer physikalischen oder chemischen Prozessgröße eines Mediums,
mit einer schwingfähigen Einheit (1),
mit einer Antriebs-/Empfangseinheit (2),
die mindestens einen Signaleingang (3) und einen Signalausgang (4) aufweist,
und
die die schwingfähige Einheit (1) zu Schwingungen anregt,
bzw.
die deren Schwingungen empfängt,
mit einer Regel-/Auswerteeinheit (5),
die mindestens einen Signaleingang (3) und einen Signalausgang (4) aufweist,
die die Antriebs-/Empfangseinheit (2) regelt,
bzw.
die die Schwingungen der schwingfähigen Einheit (1) auswertet,
und
mit mindestens einer Sendeleitung (6) und einer Empfangsleitung (7) zwischen der Regel-/Auswerteeinheit (5) und der Antriebs-/Empfangseinheit (2),
wobei die Sendeleitung (6) mit dem Signalausgang (4) der Regel-/Auswerteeinheit (5) und dem Signaleingang (3) der Antriebs-/Empfangseinheit (2) verbunden ist,
und
wobei die Empfangsleitung (7) mit dem Signalausgang (4) der Antriebs-/Empfangseinheit (2) und dem Signaleingang (3) der Regel-/Auswerteeinheit (5) verbunden ist,
wobei die Sendeleitung (6) und die Empfangsleitung (7) mit der Regel-/Auswerteeinheit (5) und mit der Antriebs-/Empfangseinheit (2) über Steckverbindungen (10) verbunden sind,
wobei mindestens eine dritte Leitung (8) vorgesehen ist,
die derartig ausgestaltet und angeordnet ist,
dass sie im Bereich der Steckverbindungen (10) zwischen der Sende- (6) und Empfangsleitung (7) befindlich ist,
**dadurch gekennzeichnet,**
**dass** die dritte Leitung (8)
mit einer Spannungsquelle (9) verbunden ist,
die eine Ausgangsimpedanz besitzt, die kleiner ist als die Impedanz einer Kondensatbrücke zwischen Sende- (6) und Empfangsleitung (7) im Bereich der Steckverbindungen (10),
und
**dass** es sich bei der Spannungsquelle (9), mit der die dritte Leitung (8) verbunden ist, um eine Elektronikeinheit mit niedriger Ausgangsimpedanz handelt, die derartig ausgestaltet ist, dass die dritte Leitung (8) auf dem gleichen Potential wie die Empfangsleitung (7) liegt.

2. Vorrichtung nach Anspruch 1,
**dadurch gekennzeichnet,**
**dass** es sich bei der dritten Leitung (8) um eine Abschirmung der Empfangsleitung (7) handelt.

3. Vorrichtung nach Anspruch 1,
**dadurch gekennzeichnet,**
**dass** die Antriebs-/Empfangseinheit (2) mindestens ein piezo-elektrisches Element aufweist.

4. Vorrichtung nach Anspruch 1 oder 3,
**dadurch gekennzeichnet,**
**dass** die Antriebs-/Empfangseinheit (2) genau ein piezo-elektrisches Element aufweist.

## Claims

1. Unit designed to measure and/or monitor a physical or chemical process variable of a medium,
with a unit capable of vibrating (1),
with a drive/receiver unit (2),
which has at least one signal input (3) and one signal output (4),
and
which causes the unit capable of vibrating (1) to vibrate,
or
which receives said unit's vibrations,
with a control/evaluation unit (5),
which has at least one signal input (3) and one signal output (4),
which controls the drive/receiver unit (2),
or
which evaluates the vibrations of the unit capable of vibrating (1),
and
with a least one transmission cable (6) and one receiver cable (7) between the control/evaluation unit (5) and the drive/receiver unit (2),
wherein the transmission cable (6) is connected to the signal output (4) of the control/evaluation unit (5) and the signal input (3) of the drive/receiver unit (2),
and
wherein the receiver cable (7) is connected to the signal output (4) of the drive/receiver unit (2) and the signal input (3) of the control/evaluation unit (5),
wherein the transmission cable (6) and the receiver cable (7) are connected to the control/evaluation unit (5) and the drive/receiver unit (2) via plug-in connections (10),
wherein at least a third cable (8) is provided,
which is designed and arranged in such a way that
it is located between the transmission cable (6) and the receiver cable (7) in the area of the plug-in connections (10),
**characterized in that**
the third cable (8)
is connected to a voltage source (9),
which has an output impedance which is smaller than the impedance of a condensate bridge between the transmission cable (6) and the receiver cable (7), in the area of the plug-in connections (10),
and
**in that** the voltage source (9), to which the third cable (8) is connected, is an electronic unit with a low output impedance which is designed in such a way that the third cable (8) is connected to the same potential as the receiver cable (7).

2. Unit as claimed in Claim 1,
**characterized in that**
the third cable (8) is a screen of the receiver cable (7).

3. Unit as claimed in Claim 1,
**characterized in that**
the drive/receiver unit (2) has at least one piezoelectric element.

4. Unit as claimed in Claim 1 or 3,
**characterized in that**
the drive/receiver unit (2) has precisely one piezoelectric element.

## Revendications

1. Dispositif destiné à la mesure et/ou la surveillance d'une grandeur process physique ou chimique d'un produit,
avec une unité apte à vibrer (1),
avec une unité d'entraînement / de réception (2),
qui comporte au minimum une entrée de signal (3) et une sortie de signal (4),
et
qui excite l'unité apte à vibrer (1) en vibrations,
ou
qui reçoit ses vibrations,
avec une unité de régulation / d'exploitation (5),
qui comporte au minimum une entrée de signal (3) et une sortie de signal (4),
qui régule l'unité d'entraînement / de réception,
ou
qui exploite les vibrations de l'unité apte à vibrer (1),
et
avec au moins un câble d'émission (6) et un câble de réception (7) entre l'unité de régulation / d'exploitation (5) et l'unité d'entraînement / de réception (2),
le câble d'émission (6) étant relié avec la sortie de signal (4) de l'unité de régulation / d'exploitation (5) et l'entrée de signal (3) de l'unité d'entraînement / de réception (2), et
le câble de réception (7) étant relié avec la sortie de signal (4) de l'unité d'entraînement / de réception (2) et l'entrée de signal (3) de l'unité de régulation / d'exploitation (5),
le câble d'émission (6) et le câble de réception (7) étant reliés avec l'unité de régulation / d'exploitation (5) et avec l'unité d'entraînement / de réception (2) par l'intermédiaire de connecteurs (10),
pour lequel est prévu un troisième câble,
qui est conçu et disposé de telle sorte
à se trouver dans la zone des connecteurs (10), entre le câble d'émission (6) et le câble de réception (7),
**caractérisé en ce**
**que** le troisième câble (8)
est relié avec une source de tension (9),
qui présente une impédance de sortie inférieure à l'impédance d'un pont de condensateur entre le câble d'émission (6) et le câble de réception (7), dans la zone des connecteurs (10),
et
**que** concernant la source de tension (9), avec laquelle le troisième câble (8) est relié, il s'agit d'une unité électronique avec une faible impédance de sortie, laquelle est conçue de telle manière que le troisième câble (8) se trouve au même potentiel que le câble de réception (7).

2. Dispositif selon la revendication 1,
**caractérisé en ce**
**que**, concernant le troisième câble (8), il s'agit d'un blindage du câble de réception (7).

3. Dispositif selon la revendication 1,
**caractérisé en ce**
**que** l'unité d'entraînement / de réception (2) comporte au moins un élément piézoélectrique.

4. Dispositif selon la revendication 1 ou 3,
**caractérisé en ce**
**que** l'unité d'entraînement / de réception (2) comporte exactement un élément piézoélectrique.
